# EUROPEAN PATENT APPLICATION

(11) **EP 3 734 416 A1**
(43) Date of publication of application: **04.11.2020**
(21) Application number: 19171741.2
(22) Date of filing: 30.04.2019
(51) Int. Cl.: G06F 3/01

(54) **HEAD MOUNTED DISPLAY SYSTEM CAPABLE OF INDICATING A TRACKING UNIT TO TRACK A HAND GESTURE OR A HAND MOVEMENT OF A USER OR NOT, RELATED METHOD AND RELATED NON-TRANSITORY COMPUTER READABLE STORAGE MEDIUM**

(71) Applicant: XRSpace CO., LTD., Taoyuan City 330 (TW)
(72) Inventor: Hsieh, Yi-Kang, 310 Hsinchu County (TW)
(74) Representative: Straus, Alexander

(57) **Abstract**

A head mounted display system (1, 1', 1", 1"') includes a head mounted display, a tracking unit (14, 14', 14", 14"'), a switch unit (15, 15', 15", 15'") and a processing unit (13, 13', 13", 13'"). The head mounted display is for displaying images to a user. The tracking unit (14, 14', 14", 14'") is for tracking a hand gesture or a hand movement of the user in a first state or not to track the hand gesture or the hand movement of the user in a second state. The switch unit (15, 15', 15", 15'") is for generating an activating command when a state of the switch unit (15, 15', 15", 15'") is changed. The processing unit (13, 13', 13", 13'") is coupled to the tracking unit (14, 14', 14", 14'") and the switch unit (15, 15', 15", 15'") for switching the tracking unit (14, 14', 14", 14'") between the first state and the second state in response to the activating command. Therefore, it can save power consumption and prevent an unexpected output due to an unexpected tracking result of the tracking unit (14, 14', 14", 14'").

## Description

### Field of the Invention

The present disclosure relates to a head mounted display system capable of indicating a tracking unit to track a hand gesture or a hand movement of a user or not, a related method and a related non-transitory computer readable storage medium according to the pre-characterizing clauses of claims 1, 8 and 13.

### Background of the Invention

With the advancement and development of technology, the demand of interactions between a computer game and a user is increased. Human-computer interaction technology, e.g. somatosensory games, virtual reality (VR) environment, augmented reality (AR) environment, mixed reality (MR) environment and extended reality (XR) environment, becomes popular because of its physiological and entertaining function. In order to enhance a user's experience in the human-computer interaction technology, a conventional display apparatus, such as a head mounted display (HMD), usually includes a camera for capture environmental information. However, when the camera is capable of being used as a tracking unit for tracking at least one of a hand gesture and a hand movement of a user, it consumes a lot of electricity for operation of the tracking unit. Furthermore, the tracking unit may provide an unexpected output based on an unexpected tracking result of the tracking unit, which brings inconvenience in use.

### Summary of the Invention

This is mind, the present disclosure aims at providing a head mounted display system capable of indicating a tracking unit to track a hand gesture or a hand movement of a user or not, a related method and a related non-transitory computer readable storage medium for saving power consumption and preventing an unexpected output generated by the tracking unit.

This is achieved by a head mounted display system capable of indicating a tracking unit to track a hand gesture or a hand movement of a user or not, a related method and a related non-transitory computer readable storage medium according to the pre-characterizing clauses of claims 1, 8 and 13. The dependent claims pertain to corresponding further developments and improvements.

As will be seen more clearly from the detail description following below, the claimed head mounted display system includes a wearable body, a display unit, a tracking unit, a switch unit and a processing unit. The wearable body is configured to be worn by a user. The display unit is configured to display images to the user. The tracking unit is configured to track at least one of a hand gesture and a hand movement of the user in a first state or not to track the at least one of the hand gesture and the hand movement of the user in a second state. The switch unit is configured to generate an activating command when a state of the switch unit is changed. The processing unit is coupled to the tracking unit and the switch unit. The processing unit is configured to switch the tracking unit between the first state and the second state in response to the activating command generated by the switch unit.

Furthermore, the claimed method of switching a tracking unit of a head mounted display system between a first state and a second state includes utilizing a switch unit of the head mounted display system to generate an activating command when a state of the switch unit is changed; and utilizing a processing unit of the head mounted display system to switch the tracking unit between the first state and the second state in response to the activating command. The tracking unit is configured to track at least one of a hand gesture and a hand movement of a user in the first state or not to track the at least one of the hand gesture and the hand movement of the user in the second state.

Besides, the claimed non-transitory computer readable storage medium stores a program that causes the aforementioned head mounted display system to execute the aforementioned method.

In summary, the present disclosure utilizes the switch unit to generate the activating command when the state of the switch unit is changed and further utilizes the processing unit to switch the tracking unit between the first state and the second state in response to the activating command. Therefore, it allows the user to enable or disable a hand tracking function of the tracking unit according to practical demands, which can save power consumption and prevent an unexpected output generated by the tracking unit due to an unexpected tracking result of the tracking unit.

These and other objectives of the present invention will no doubt become obvious to those of ordinary skill in the art after reading the following detailed description of the preferred embodiment that is illustrated in the various figures and drawings.

### Brief Description of the Drawings

In the following, the disclosure is further illustrated by way of example, taking reference to the accompanying drawings. Thereof
FIG. 1 is a diagram of a head mounted display system according to a first embodiment of the present disclosure,
FIG. 2 is a functional block diagram of the head mounted display system according to the first embodiment of the present disclosure,
FIG. 3 is a flow chart diagram illustrating a method of switching a tracking unit of the head mounted display system between a first state and a second state according to the first embodiment of the present disclosure,
FIG. 4 is a diagram of a head mounted display system according to a second embodiment of the present disclosure,
FIG. 5 is a functional block diagram of the head mounted display system according to the second embodiment of the present disclosure,
FIG. 6 is a functional block diagram of a head mounted display system according to a third embodiment of the present disclosure, and
FIG. 7 is a functional block diagram of a head mounted display system according to a fourth embodiment of the present disclosure.

### Detailed Description

Certain terms are used throughout the description and following claims to refer to particular components. As one skilled in the art will understand, electronic equipment manufacturers may refer to a component by different names. This document does not intend to distinguish between components that differ in name but not function. In the following description and in the claims, the terms "include" and "comprise" are used in an open-ended fashion, and thus should be interpreted to mean "include, but not limited to..." In addition, to simplify the descriptions and make it more convenient to compare between each embodiment, identical components are marked with the same reference numerals in each of the following embodiments. Please note that the figures are only for illustration and the figures may not be to scale. Also, the term "couple" is intended to mean either an indirect or direct electrical/mechanical connection. Thus, if a first device is coupled to a second device, that connection may be through a direct electrical/mechanical connection, or through an indirect electrical/mechanical connection via other devices and connections.

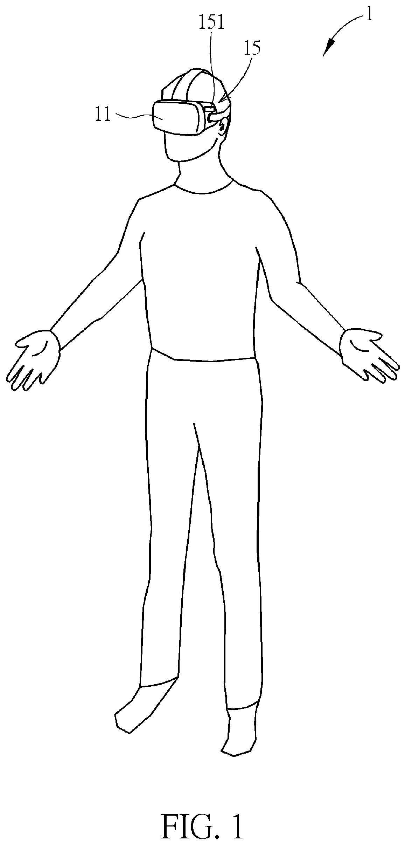

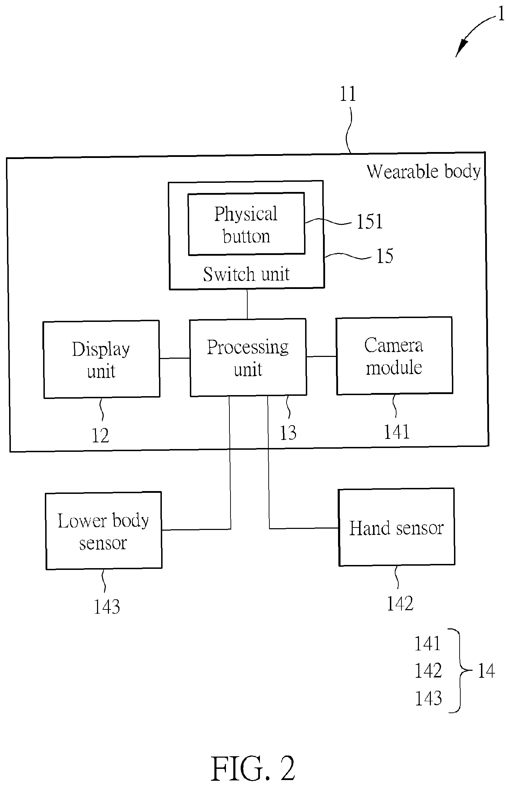

Please refer to FIG. 1 and FIG. 2. FIG. 1 is a diagram of a head mounted display system 1 according to a first embodiment of the present disclosure. FIG. 2 is a functional block diagram of the head mounted display system 1 according to the first embodiment of the present disclosure. As shown in FIG. 1 and FIG. 2, the head mounted display system 1 includes a wearable body 11, which can be worn by a user, a display unit 12, a processing unit 13, a tracking unit 14 and a switch unit 15.

The display unit 12 is configured to display images, such as images of a virtual environment, to the user. In this embodiment, the display unit 12 can be mounted on the wearable body 11 and can be a liquid crystal display (LCD), light-emitting diode (LED) display, an organic light-emitting diode (OLED) display, or any other display. However, the present disclosure is not limited thereto.

The tracking unit 14 is configured to track at least one of a hand gesture and a hand movement of the user for providing interactive features. In this embodiment, the tracking unit 14 can include a camera module 141 mounted on the wearable body 11, a hand sensor worn on a hand of the user, and a lower body sensor worn on a lower body of the user for tracking the hand gesture or the hand movement of the user. However, the present disclosure is not limited to this embodiment. In another embodiment, the hand sensor and the lower body sensor can be omitted, and the tracking unit can only include the camera module.

The switch unit 15 is configured to generate an activating command when a state of the switch unit 15 is changed. In this embodiment, the switch unit 15 can include a physical button 151, and the state of the switch unit 15 can be changed when the physical button 151 is clicked. However, the present disclosure is not limited to this embodiment. In another embodiment, which will be described later, the state of the switch unit can be changed by other means.

The processing unit 13 is coupled to the tracking unit 14 and the switch unit 15. The processing unit 13 is configured to switch the tracking unit 14 between a first state and a second state in response to the activating command generated by the switch unit 15. In this embodiment, the processing unit 13 can be implemented in software, firmware, hardware configuration, or a combination thereof. For example, the processing unit 13 can be a processor, such as a central processing unit, an application processor, a microprocessor, etc., which is mounted on the wearable body 11, or can be realized by an application specific integrated circuit (ASIC), which is mounted on the wearable body 11. However, the present disclosure is not limited thereto.

Besides, in this embodiment, the display unit 12, the processing unit 13, the tracking unit 14 and the switch unit 15 are disposed on the wearable body 11. However, the present disclosure is not limited to this embodiment. For example, in another embodiment, the head mounted display system further includes a remote computing apparatus disposed away from the wearable body separately and a communication module disposed on the wearable body for constructing a communication channel to the remote computing apparatus. The remote computing apparatus can be an edge computing device, a cloud computing device, a local host computer, a remote sever, a smartphone, or the like. The communication module can establish a wired connection or a wireless connection between elements on the wearable body and elements on the remote computing apparatus. The processing unit or the tracking unit can be at least partly disposed on the remote computing apparatus other than the wearable body and/or distributes part of the tasks to the remote computing apparatus, so that the tracking result of the tracking unit or the activating command can be transmitted between the remote computing apparatus and the wearable body via the communication module, so as to reduce the size and calculation of the wearable body, which makes the wearable body lightweight and portable.

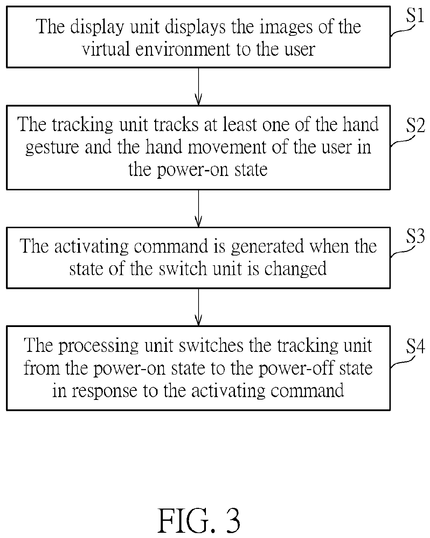

Please refer to FIG. 3. FIG. 3 is a flow chart diagram illustrating a method of switching the tracking unit 14 of the head mounted display system 1 between the first state and the second state according to the first embodiment of the present disclosure. As shown in FIG. 3, the method includes the following steps:
S1: The display unit 12 displays the images of the virtual environment to the user.
S2: The tracking unit 14 tracks at least one of the hand gesture and the hand movement of the user in the first state.
S3: The activating command is generated when the state of the switch unit 15 is changed.
S4: The processing unit 13 switches the tracking unit 14 from the first state to the second state in response to the activating command.

Detailed description for the steps is provided as follows. In steps S1 and S2, when the user wears the wearable body 11, the display unit 12 can display the images of the virtual environment to the user. When the user experiences the virtual environment, the tracking unit 14 can be in the first state by default. At this moment, the tracking unit 14 can track at least one of the hand gesture and the hand movement of the user in the first state, so as to allow the user to interact with a virtual object of the virtual environment according to the tracking result of the tracking unit 14. In steps S3 and S4, when it is desired to disable a hand tracking function of the tracking unit 14, the user can change the state of the switch unit 15 by clicking the physical button 151, e.g., the user can activate the switch unit 15 by clicking the physical button 151, so as to generate the activating command. Furthermore, the processing unit 13 switches the tracking unit 14 from the first state to the second state in response to the activating command, so that the tracking unit 14 does not track at least one of the hand gesture and the hand movement of the user in the second state, which can achieve a purpose of saving power consumption and preventing an unexpected output generated by the tracking unit 14 due to an unexpected tracking result of the tracking unit 14.

In this embodiment, the processing unit 13 can be configured to enable or disable the hand tracking function of the tracking unit 14 without interruption of other functions. However, it is not limited thereto. In another embodiment, the processing unit also can be configured to power on or power off the tracking unit. In other words, the first state can be a power-on state, and a second state can be a power-off state.

Understandably, when it is desired to enable the hand tracking function of the tracking unit 14, the user can change the state of the switch unit 15 by clicking the physical button 151 again, e.g., the user can activate the switch unit 15 by clicking the physical button 151 again, so as to generate the activating command for indicating the processing unit 13 to switch the tracking unit 14 from the second state to the first state.

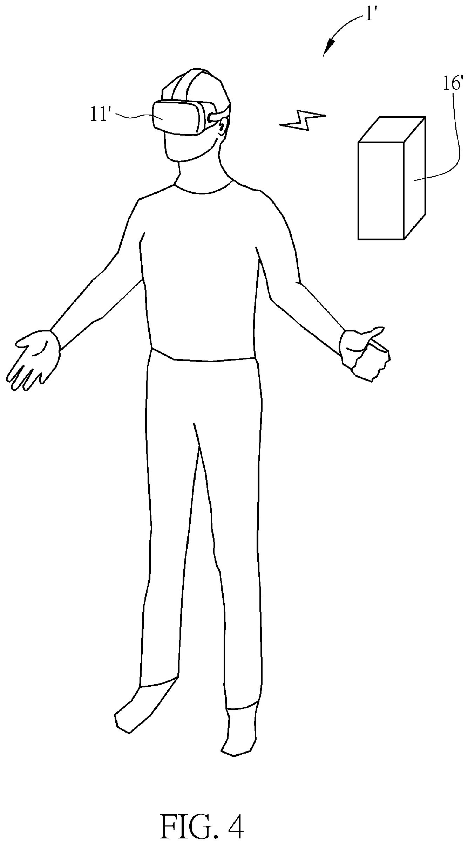

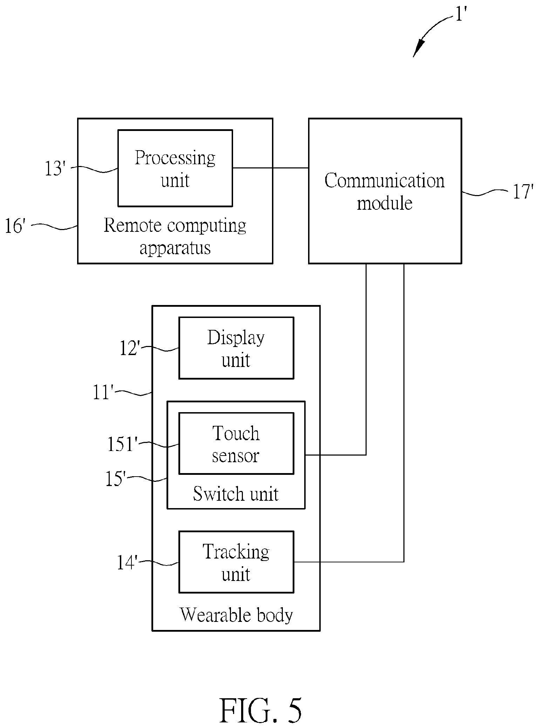

Please refer to FIG. 4 and FIG. 5. FIG. 4 is a diagram of a head mounted display system 1' according to a second embodiment of the present disclosure. FIG. 5 is a functional block diagram of the head mounted display system 1' according to the second embodiment of the present disclosure. As shown in FIG. 4 and FIG. 5, different from the head mounted display system 1 of the first embodiment, the head mounted display system 1' includes a wearable body 11', a display unit 12', a processing unit 13', a tracking unit 14', a switch unit 15', a remote computing apparatus 16' and a communication module 17'. The structures and the configurations of the wearable body 11' and the display 12' of this embodiment are similar to the ones of the wearable body 11 and the display unit 12 of the first embodiment. Detailed description is omitted herein. The tracking unit 14' of this embodiment includes a camera module 141' mounted on the wearable body 11'. The processing unit 13' of this embodiment is configured on the remote computing apparatus 16' and coupled to the switch unit 15' and the tracking unit 14' by the communication module 17'. The switch unit 15' of this embodiment includes a touch sensor 151' mounted on the wearable body 11', and the state of the switch unit 15' is changed when the touch sensor 151' is double tapped.

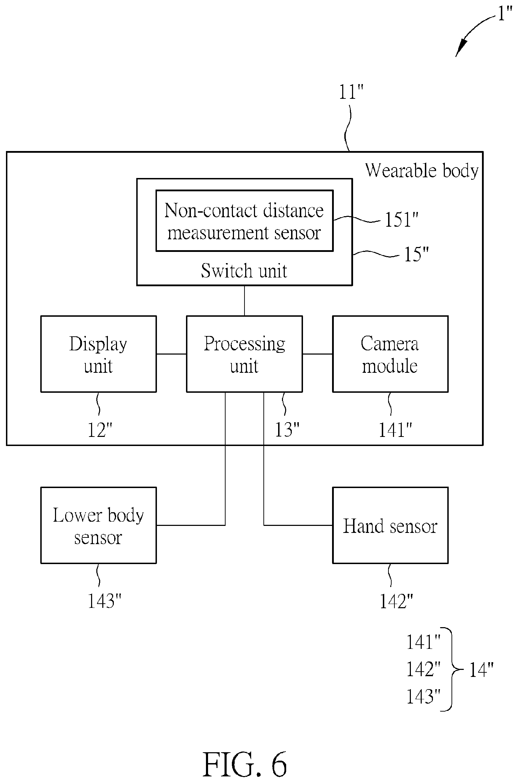

Please refer to FIG. 6. FIG. 6 is a functional block diagram of a head mounted display system 1" according to a third embodiment of the present disclosure. As shown in FIG. 6, different from the head mounted display systems 1, 1' of the aforementioned embodiments, the head mounted display system 1" includes a wearable body 11", a display unit 12", a processing unit 13", a tracking unit 14" and a switch unit 15". The structures and the configurations of the wearable body 11", the display 12" and the tracking unit 14" of this embodiment are similar to the ones of the wearable body 11 and the display unit 12 of the first embodiment. Detailed description is omitted herein. The switch unit 15" of this embodiment includes a non-contact distance measurement sensor 151", and the state of the switch unit 15" is changed when a measuring result of the non-contact distance measurement sensor 151" meets a predetermined condition. For example, the non-contact distance measurement sensor 151" can measure a distance between the non-contact distance measurement sensor and a hand of the user in a non-contact manner, as a proximity switch, and the predetermined condition can refer to a predetermined distance. When the non-contact distance measurement sensor 151" determines that the distance between the hand of the user and the non-contact distance measurement sensor 151" is equal to or less than the predetermined distance, the switch unit 15" can generate the activating command. In this embodiment, the non-contact distance measurement sensor 151" can include an infrared sensor. However, the present disclosure is not limited thereto.

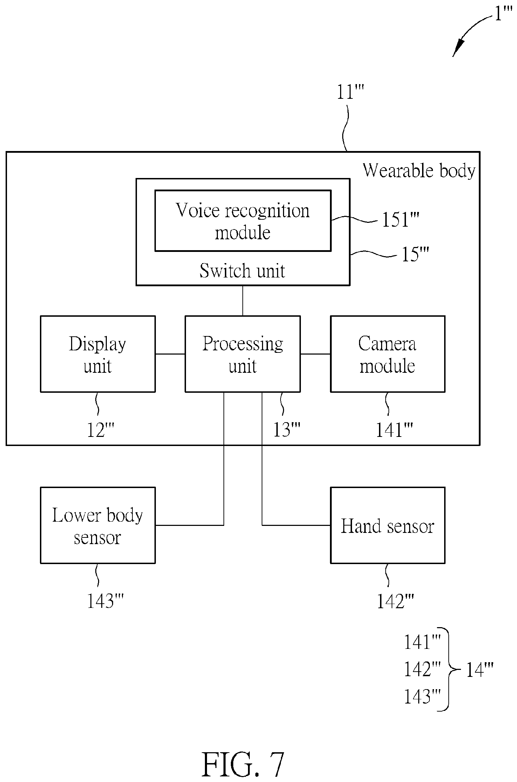

Please refer to FIG. 7. FIG. 7 is a functional block diagram of a head mounted display system 1'" according to a fourth embodiment of the present disclosure. As shown in FIG. 7, different from the head mounted display systems 1, 1', 1" of the aforementioned embodiments, the head mounted display system 1'" includes a wearable body 11"', a display unit 12"', a processing unit 13"', a tracking unit 14'" and a switch unit 15'". The structures and the configurations of the wearable body 11'", the display 12'" and the tracking unit 14'" of this embodiment are similar to the ones of the wearable body 11 and the display unit 12 of the first embodiment. Detailed description is omitted herein. The switch unit 15'" includes a voice recognition module 151"', and the state of the switch unit 15'" is changed when a recognizing result of the voice recognition module 151'" meets a predetermined condition. For example, the voice recognition module 151'" can recognize a voice command of the user, and the predetermined condition can refer to a predetermined voice command. When the voice recognition module 151'" determines that the voice command of the user matches with the predetermined voice command, the switch unit 15'" can generate the activating command. In this embodiment, the voice recognition module 151'" can include a microphone. However, it is not limited thereto.

Furthermore, the above-described embodiments of the present disclosure can be implemented in software, firmware, hardware configuration, or combination thereof, and it is also possible to provide a non-transitory computer readable storage medium for storing a program that causes a head mounted display system to execute any one of the aforementioned methods by a processor. The processor can be a central processing unit, an application processor, a microprocessor, etc., or may be realized by an application specific integrated circuit (ASIC). The computer-readable recording medium can be a Read-Only Memory (ROM), a random-access memory (RAM), a CD-ROM, a magnetic tape, a floppy disk, or an optical data storage device. However, the present disclosure is not limited thereto.

In contrast to the prior art, the present disclosure utilizes the switch unit to generate the activating command when the state of the switch unit is changed and further utilizes the processing unit to switch the tracking unit between the first state and the second state in response to the activating command. Therefore, it allows the user to enable or disable the hand tracking function of the tracking unit according to practical demands, which can save power consumption and prevent an unexpected output generated by the tracking unit due to an unexpected tracking result of the tracking unit.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A head mounted display system (1, 1', 1", 1"') comprising:
a wearable body (11, 11', 11", 11"') configured to be worn by a user; and
a display unit (12, 12', 12", 12"') disposed on the wearable body (11, 11', 11", 11'") and configured to display images to the user; and
**characterized in that** the head mounted display system (1, 1', 1", 1'") further comprises:
a tracking unit (14, 14', 14", 14'") configured to track at least one of a hand gesture and a hand movement of the user in a first state or not to track the at least one of the hand gesture and the hand movement of the user in a second state;
a switch unit (15, 15', 15", 15'") configured to generate an activating command when a state of the switch unit (15, 15', 15", 15'") is changed; and
a processing unit (13, 13', 13", 13'") coupled to the tracking unit (14, 14', 14", 14'") and the switch unit (15, 15', 15", 15'"), the processing unit (13, 13', 13", 13'") being configured to switch the tracking unit (14, 14', 14", 14'") between the first state and the second state in response to the activating command generated by the switch unit (15, 15', 15", 15'").

2. The head mounted display system (1) of claim 1, **characterized in that** the switch unit (15) comprises a physical button (151), and the state of the switch unit (15) is changed when the physical button (151) is clicked.

3. The head mounted display system (1') of claim 1, **characterized in that** the switch unit (15') comprises a touch sensor (151'), and the state of the switch unit (15') is changed when the touch sensor (151') is double tapped.

4. The head mounted display system (1") of claim 1, **characterized in that** the switch unit (15") comprises a non-contact distance measurement sensor (151"), and the state of the switch unit (15") is changed when a measuring result of the non-contact distance measurement sensor (151") meets a predetermined condition.

5. The head mounted display system (1'") of claim 1, **characterized in that** the switch unit (15"') comprises a voice recognition module (151"'), and the state of the switch unit (15'") is changed when a recognizing result of the voice recognition module (151'") meets a predetermined condition.

6. The head mounted display system (1') of claim 1, **characterized in that** the head mounted display system (1') further comprises:
a remote computing apparatus (16') not disposed on the wearable body (11'); and
a communication module (17') for constructing a communication channel to the remote computing apparatus (16');
wherein at least one of the processing unit (13') and the switch unit (15') is at least partly disposed on the remote computing apparatus (16').

7. The head mounted display system of claim 6, **characterized in that** the tracking unit is partly disposed on the remote computing apparatus.

8. A method of switching a tracking unit (14, 14', 14", 14'") of a head mounted display system (1, 1', 1", 1'") between a first state and a second state, **characterized in that** the method comprises:
utilizing a switch unit (15, 15', 15", 15'") of the head mounted display system (1, 1', 1", 1'") to generate an activating command when a state of the switch unit (15, 15', 15", 15'") is changed; and
utilizing a processing unit (13, 13', 13", 13'") of the head mounted display system (1, 1', 1", 1'") to switch the tracking unit (14, 14', 14", 14'") between the first state and the second state in response to the activating command, wherein the tracking unit (14, 14', 14", 14'") is configured to track at least one of a hand gesture and a hand movement of a user in the first state or not to track the at least one of the hand gesture and the hand movement of the user in the second state.

9. The method of claim 8, **characterized in that** the method further comprises:
changing the state of the switch unit (15) when a physical button (151) of the switch unit (15) is clicked.

10. The method of claim 8, **characterized in that** the method further comprises:
changing the state of the switch unit (15') when a touch sensor (151') of the switch unit (15') is double tapped.

11. The method of claim 8, **characterized in that** the method further comprises:
changing the state of the switch unit (15") when a measuring result of a non-contact distance measurement sensor (151") of the switch unit (15") meets a predetermined condition.

12. The method of claim 8, **characterized in that** the method further comprises:
changing the state of the switch unit (15'") when a recognizing result of a voice recognition module (151'") of the switch unit (15'") meets a predetermined condition.

13. A non-transitory computer readable storage medium **characterized in that** the non-transitory computer readable storage medium stores a program that causes the head mounted display system (1, 1', 1", 1'") to execute the method of any one of claims 8 to 12.
